# EUROPEAN PATENT SPECIFICATION

(11) **EP 2 136 184 B1**
(45) Date of publication and mention of the grant of the patent: **03.06.2015**
(21) Application number: 09172372.6
(22) Date of filing: 27.08.2003
(51) Int. Cl.: G08G 1/01, G08G 1/0968, G08G 1/00, G01C 21/34, G08G 1/0967

(54) **Traffic scheduling system**
Verkehrsplanungssystem
Système de programmation de trafic

(30) Priority: 29.08.2002 GB 0220062
(43) Date of publication of application: 23.12.2009
(62) Divisional of application: 03791017.1
(73) Proprietor: INRIX UK LIMITED, Altrincham, Cheshire WA14 1EP (GB)
(72) Inventor: Burr, Jonathan Charles, Altrincham Cheshire WA15 9QA (GB); Gates, Gary, Wirral CH60 6TQ (GB); Slater, Alan George, Bolton BL1 5DZ (GB)
(74) Representative: Hill, Justin John

(56) References cited:
- US-B1- 6 317 686

## Description

### Field of the Invention

The present invention relates to methods and apparatus for traffic scheduling and particularly for scheduling vehicles on road journeys. However, it also applies to shipping operations, aircraft as well as rail journeys and multi-modal journeys which combine movement in two or more modes of transit.

The preferred embodiment of the present invention uses two forms of traffic planning data for scheduling vehicle journeys. First, pre-event traffic planning data is used in the form of a forecast of probable vehicle speed over a particular stretch of road at a particular time, e.g. a particular time of the day on a particular day of the week. Such data is based upon analysis of actual travel times gained from the vehicles which traverse a particular stretch of road and the knowledge that similar circumstances may take place. Secondly, a current traffic delay reporting system provides real time data in terms of actual vehicle speeds over a particular stretch of road at a particular time, e.g. a particular time on a predetermined day. In addition a feedback loop compares actual traffic speed data with the pre-event traffic planning data already provided in order to improve the quality of the pre-event data. This information is useful to both traffic planners and those drivers planning and undertaking journeys in order that they may be able to accurately calculate their specific journey times.

For the purposes of this specification the term "traffic planner" includes any person or apparatus capable of planning or undertaking a journey or multiple journeys. The ability to obtain live traffic delay data also allows those planning and undertaking journeys to re-plan and re-route vehicles in order to avoid known delay spots. The term "transit point" used herein means a stopping place on a journey, for example for loading or unloading payloads and delivery items.

### Background Art

Commercial vehicle routing and scheduling methods have been in existence for many years, providing a minimum mileage estimate for single or multiple vehicle journeys of one or more drops or stopping places. One such known system is disclosed in a paper entitled "Scheduling Vehicles from a Central Depot to a Number of Delivery Points" Clark, G., and Wright, J. W., Operations Research (1963), 11, 568-581. Known methods, however complex, rely on the determination of an average vehicle speed for a particular type of vehicle (for example, an articulated vehicle) over a defined type of road (for example, a motorway). More sophisticated systems apply congestion factors to potential travel speeds as percentage reductions in the defined speed between specific times on a particular day.

In practice, vehicles travel over different stretches of any road at different speeds depending upon the time of day, type of vehicle, volume of traffic, restrictions such as road works, or specific traffic incidents such as accidents or breakdowns. Since actual traffic speeds are affected by traffic congestion of one type or another, forecast travel times used in vehicle routing and scheduling techniques are inaccurate.

In the commercial sector, the results of inaccurate forecasts are particularly significant upon the productivity of both the resources and staff undertaking a journey. In the last few years, vehicle routing and scheduling methods have lost favour with operational managers due to the gap between planned journey times and actual journey times. For example, in a commercial operation delivering orders to customers within required time windows, it is estimated that more than 18% time contingency is built in to the daily traffic plan to ensure a 98% probability of success in achieving all the deliveries within the desired time windows. Furthermore extension of the working day (often resulting in the payment of overtime to both drivers and warehouse staff) may be another consequence if the delivery time is extended due to traffic congestion. Journey planners are also criticised because the 18% time contingency built into a traffic planning schedule results in productive time being wasted on a good day.

US 6,317,686 discloses a traffic information system for predicting travel times utilizing Internet based collection and dissemination of information.

Therefore, to date the majority of telematics systems have been limited to cars and applications to support heavy goods traffic and passenger traffic have been largely ignored. Preferred embodiments of this invention focus upon the application of this technology for heavy goods and passenger traffic. However, the invention is not limited to this, the invention having applications in other fields, including the non-commercial sector, such as emergency services or other commercial applications such as aircraft, rail and shipping operations etc.

An objective of preferred traffic scheduling systems is to minimise the impact of both predicted and unpredicted traffic delays for the commercial vehicle operator. This invention seeks to provide an improved method of scheduling traffic.

According to a first aspect of the present invention, there is provided a method of operating a traffic scheduling computer system for planning journeys for delivery resources comprising multiple elements considered separate but interrelated resources wherein the multiple elements comprise one or more of at least one trailer, at least one vehicle and at least one vehicle crew, each journey having a plurality of transit stopping points, the method comprising: receiving scheduling criteria including transit stopping point data and further including availability data for the one or more of the at least one trailer, the at least one vehicle at the at least one vehicle crew, receiving map data, said map data comprising one or more routes, each route defined by a plurality of route-sections, receiving forecast speed information for a traffic unit on each said route-section, the forecast speed for a given route-section depending on historical speed data for that route-section at a predetermined time on a particular day; and planning a journey including a plurality of transit stopping points in dependence on the scheduling criteria including the availability data for the one or more of the at least one trailer, the at least one vehicle and the at least one vehicle crew and forecast speed information.

In preferred embodiments, the scheduling criteria comprise one or more of availability data of the separate but interrelated resources, distance databetween relevant transit stopping points, time data representing a time of day, depot data, customer data, and product data. The availability data might comprise, for example, availability information for one or more of a prime mover, and a driver. The forecast journey speeds and times are derived at least in part from historical speed data acquired by means of floating vehicle data collection units or other mobile data collection means. Live traffic monitoring may also be performed by means of floating vehicle data collection units or other mobile data collection means.

According to a second aspect of the present invention, there is provided a computer system for scheduling traffic, capable of planning journeys for delivery resources comprising multiple elements considered separate but interrelated resources wherein the multiple elements comprise one or more of at least one trailer, at least one vehicle and at least one vehicle crew, each journey having a plurality of transit stopping points, the system comprising means for receiving scheduling criteria including transit stopping point data and map data and further including availability data for the one or more of the at least one trailer, the at least one vehicle and the at least one vehicle crew, said map data comprising one or more routes, each route defined in terms of a plurality of route-sections, a data repository comprising historical speed data for each route-section, historical speed data for a particular route-section being represented for a predetermined time on a particular day, means for generating forecast speed information for a traffic unit on each said route-section based on said historical speed data, and processing means for planning a journey including a plurality of transit stopping points in dependence on said scheduling criteria including the availability data for the one or more of the at least one trailer, the at least one vehicle crew and forecast speed information.

According to a third aspect of the present invention, there is provided a method wherein at least a portion of the planned journey is re-planned according to re-scheduling criteria after the traffic unit has embarked upon the journey. Preferably, said re-planning step is triggered in response to an unpredicted traffic event or operational failure. In preferred embodiments said unpredictable event data comprises live traffic reports and/or data derived from live traffic monitoring.

According to a fourth aspect of the present invention, there is provided a method wherein a first journey solution is determined in a first algorithm processing step and an improved journey solution is determined in a further algorithm processing step.

According to a fifth aspect of the present invention, there is provided a method in which unpredictable events are categorised according to a geographic region in which they occur and information on the unpredictable event is communicated to traffic units associated with a relevant geographical region.

According to a sixth aspect of the present invention, there is provided a method in which forecast speed information for a route-section is recorded and compared with actual speed data for that route-section in order to provide a measure of reliability or feedback to the traffic scheduling algorithm.

According to a seventh aspect of the present invention, there is provided a method in which floating vehicle probes are selectively activated for monitoring based on a probability of the traffic unit carrying the probe being on a predetermined route-section.

### List of Drawings

The invention will now be described, by way of example only, with reference to the accompanying drawings in which:
Figure 1 is a schematic diagram illustrating components of a preferred traffic scheduling computer system;
Figure 2 illustrates a preferred system for on-board live data collection;
Figure 3 schematically illustrates components for producing a Road Timetable^{™} data repository suitable for use in the traffic scheduling system of Figure 1;
Figure 4 illustrates a method for determining vehicle routes suitable for use in the traffic scheduling system of Figure 1;
Figure 5 illustrates a system for reporting live traffic delays in the traffic scheduling system of Figure 1;
Figure 6 schematically illustrates components for dynamic vehicle re-planning in the traffic scheduling system of Figure 1;
Figure 7 illustrates components for live vehicle monitoring;
Figure 8 illustrates the feedback of data applying to a vehicle journey;
Figure 9 illustrates a preferred system for vehicle route planning and dynamic route planning;
Figure 10 illustrates examples of input data for deriving a planned vehicle route;
Figure 11 illustrates a sequential insertion based algorithm;
Figure 12 illustrates a parallel insertion based algorithm;
Figure 13 illustrates possible improvement phases for use in the traffic scheduling system of Figure 1;
Figure 14 illustrates a simulated annealing improvement algorithm;
Figure 15 illustrates a Tabu search improvement algorithm;
Figure 16 illustrates an algorithm used to calculate the impact of potential traffic congestion;
Figure 17 illustrates an algorithm for calculating the impact of customer drop delays; and
Figure 18 represents an algorithm which can be used for dynamic vehicle re-planning.

### Description of the Preferred Embodiment

A preferred embodiment of the present invention will now be described, by way of example only. Embodiments of this invention may be used for the planning of routes and/or schedules for all types of transport, including but not limited to cars, ambulances or other emergency or military vehicles, heavy goods vehicles, buses, coaches, aircraft, shipping and any other modes of transport.

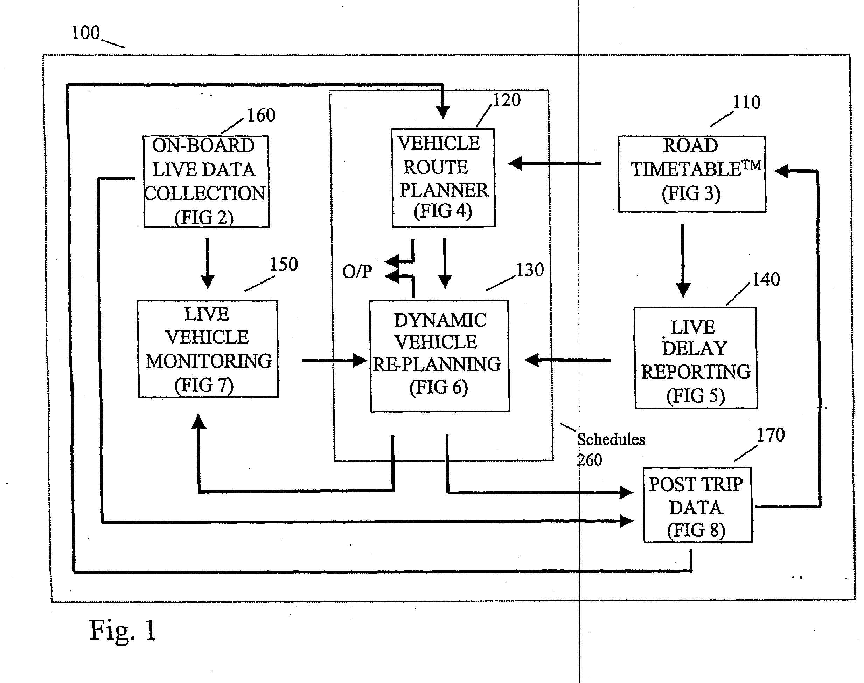

The traffic scheduling computer system of Figure 1 records daily traffic data by section of road (for example, between specific motorway junctions). It has been indicated that approximately 75% of congestion is predictable both in probability of occurrence and in the delay time expected. Such predictable traffic congestion includes that due to volume of traffic, road works, wide-load movements or extended poor weather conditions.

The ability to predict such pre-event traffic congestion is based upon the collection, interpretation, analysis and presentation of historic and forecast data both from within the public domain and from specific sources such as vehicles which are fitted with a probe to detect location and speed, which when collected is known as 'floating vehicle data' (FVD)^{™}. The outcome of this analysis is a list of "pre-event" traffic delays which is an aspect of the preferred embodiment of the present invention. The summary of the data analysis presents a forecast of travel speeds for selected types of vehicles over a specific road length at specific times of the days of the week, known as the "Road Timetable^{™}". Preferred embodiments can record speeds against calendar dates so that all patterns of traffic behaviour can be identified.

The presentation of forecast travel speeds for specific road lengths and times of the day, allows the journey planner to add this data to a vehicle routing and scheduling algorithm to produce more accurate vehicle travel plans. The application of the "Road Timetable^{™}" in a vehicle routing and scheduling method is a further aspect of the preferred embodiments of this invention. A vehicle routing and scheduling method based upon the use of this type of predictable travel time for each section of road on a journey provides an improvement over known journey planning systems. However, such systems still have a degree of error between the planned time and the actual time which corresponds to approximately 25% of unpredictable traffic delays.

Unpredictable traffic delays, such as those caused by road traffic accidents (RTA) may also be identified as they occur by means of vehicle probes which are within the area in which the delays are actually occurring or from traffic reports on particular incidents. These unpredicted incidents may be reported separately in association with a geographic location, for example a section of road in a postcode sector. Such information may be sent to both traffic planners and drivers by means of any suitable form of communication. Actual vehicle speed in unpredicted traffic scenarios may be compared with the speed forecast from historic data, thereby making it possible to determine a new predicted delay time. The calculation and communication of this current traffic delay due to unpredictable events is a further aspect of the preferred embodiment of this invention.

By monitoring vehicle progress in real time it is possible to report where traffic delays are occurring so journey planners can identify or select vehicles which are affected by the unpredicted traffic incident(s). Upon identification of a vehicle affected by an unpredictable traffic delay and determination of the delay time arising from the or each incident the information is supplied to a 'dynamic vehicle re-planning system". The dynamic vehicle re-planning system can for example enable re-routing of vehicles mid journey to avoid the unpredicted traffic delay and/or re-plan the drop sequence of a delivery load. Preferred vehicle re-planning systems can be included within or associated with general vehicle routing and/or scheduling systems.

Preferred traffic planning and re-planning systems are further enhanced if for example multiple elements of the delivery resource (trailer, prime mover and driver) are considered as separate but inter-related resources. This can be facilitated by monitoring a prime mover and a trailer separately and using driver and vehicle recognition systems. Thus, the driver and vehicle(s) can be monitored separately. The driver's identity is recognisable to the data collection unit on at least the prime mover. Considering vehicle routing and scheduling tasks in terms of a number of separate resources (trailer, prime mover and driver) offers many alternatives in the event of an unpredicted traffic delay. The application of the knowledge of the delay time from an unpredicted traffic incident in the dynamic vehicle re-planning is a further aspect of the preferred embodiment of this invention.

Figure 1 identifies component parts of the preferred computer system and how they link together. Each component part has both inputs and outputs in its own right, a detailed description of which follows. Some component parts described herein may be obtained on the commercial market from independent vendors, the functionality and construction of others will be apparent to a skilled person from the description herein. The preferred embodiment combines a number of novel aspects which include: the Road Timetable^{™} - an information resource containing forecasts of traffic speeds by type of vehicle over a particular section of road on a defined day and time accounting for known traffic delays; the application of the Road Timetable^{™} in commercial vehicle routing and scheduling, the calculation and rapid communication of potential delay time in relation to unpredictable traffic delays; and the application of such delay time in dynamic vehicle re-planning. In the context of this description the term "dynamic" means while a vehicle is en-route, i.e. has already embarked on a planned journey.

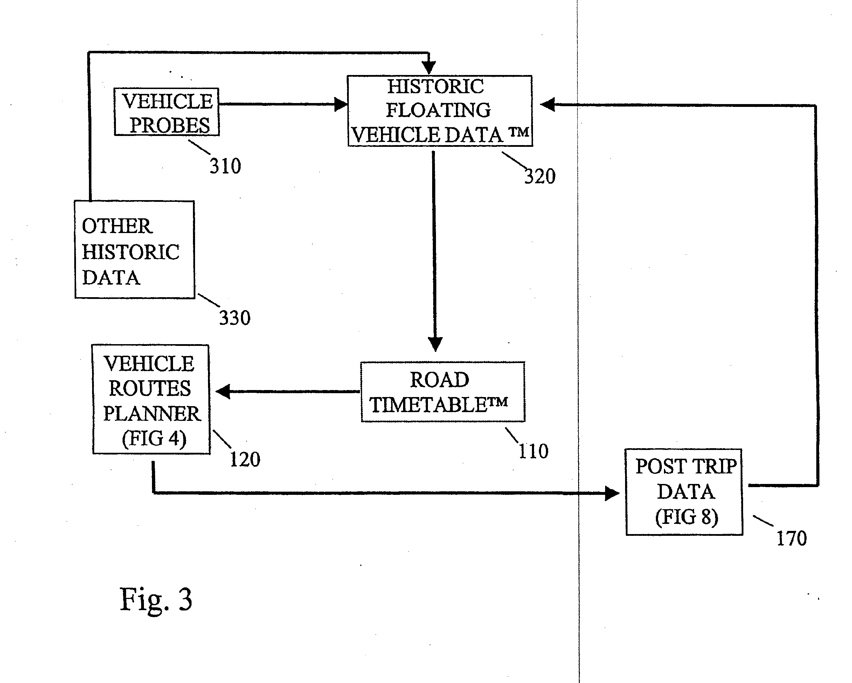

Referring to Figure 1, a preferred traffic scheduling system 100 comprises a Road Timetable^{™} 110. The Road Timetable^{™} 110 is an information resource which supplies forecast information taking into account historical traffic data to a Vehicle Route Planner 120. The forecast information is in the form of a database recording speeds by vehicle type, road section and temporal characteristics. The Road Timetable^{™} is described hereinafter with reference to Figure 3.

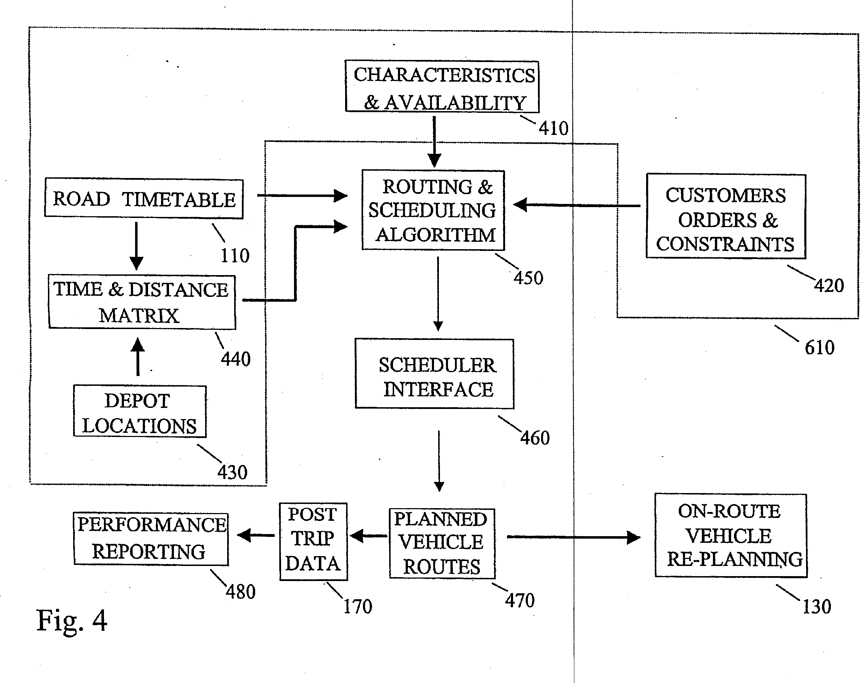

The Vehicle Route Planner 120 calculates the best route for the or each proposed journey, taking into account the start location, destination location and any transit points which may be relevant. The Vehicle Route Planner 120 and its modes of operation are described in more detail later with reference to Figure 4. The Vehicle Route Planner 120 outputs an indication of the best route or routes to a Dynamic Vehicle Re-planning stage 130.

The Dynamic Vehicle Re-planning stage 130 is capable of adjusting a route for a vehicle which is already embarked on a route determined for it. That route may have been determined by the Vehicle Route Planner 120 or an earlier re-planning process of the dynamic re-planner 130. The dynamic re-planning stage 130 receives information from a live delay reporting facility 140 and a Live Vehicle Monitoring Facility 150. The Live Vehicle Monitoring Facility 150 measures a real time delay by recording current vehicle speeds by means of vehicle-bound, i.e. "on-board" data collection units (DCUs). This collection of data is represented by box 160 of Figure 1.

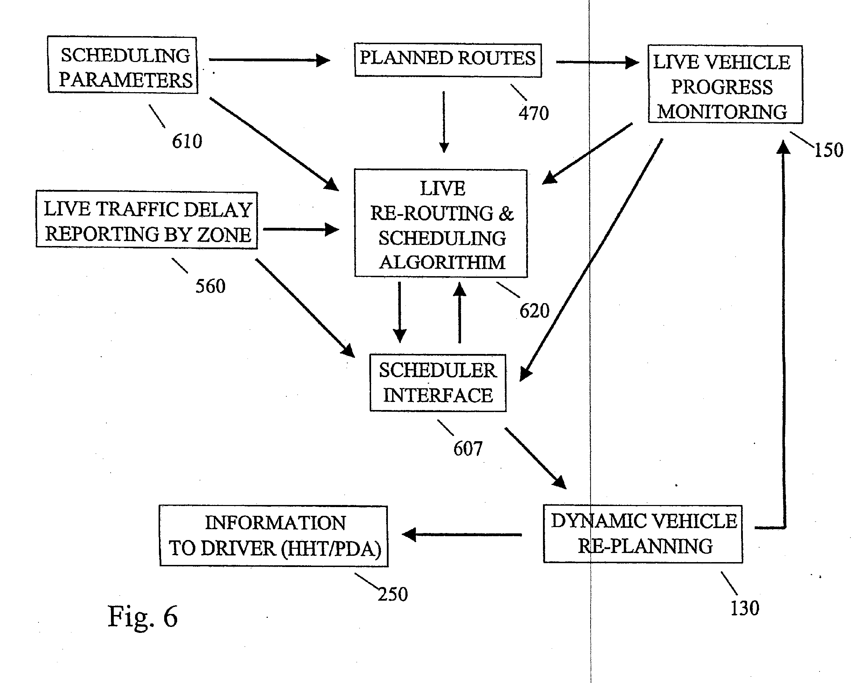

Further descriptions of the Dynamic Re-planning stage 130, the Live Delay Reporting Facility 140, the Live Vehicle Monitoring Facility 150, and the on-board data collection units are provided hereinafter with reference to Figures 6, 5, 7 and 2, respectively.

In this embodiment, the route determined by the traffic scheduling System 100 is output from box 130 to the hand held terminal as described in Fig. 6 but this configuration should not be limiting and different communication means may be employed in other embodiments.

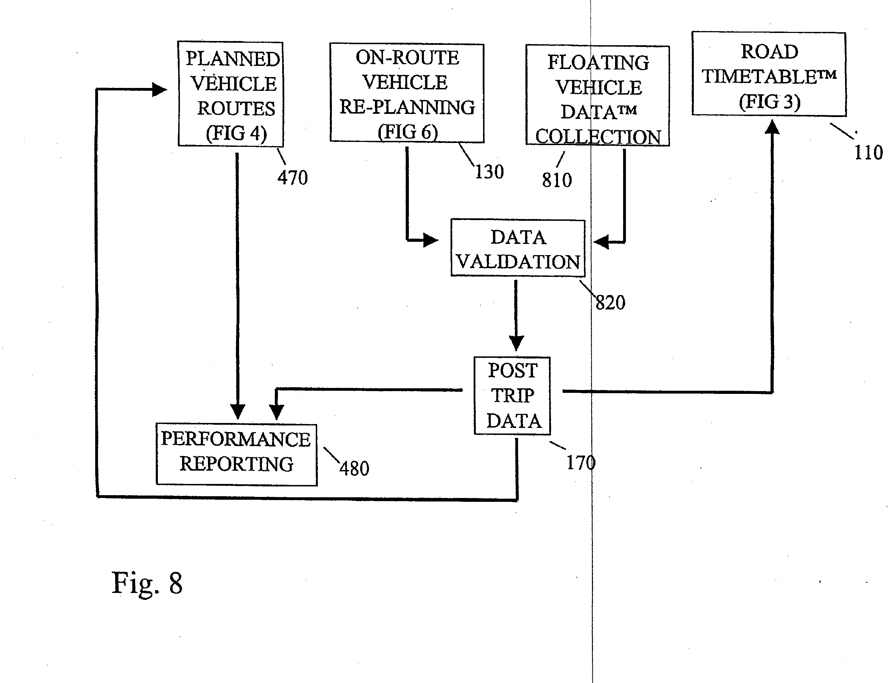

A Post Trip Data Module 170 receives route information from the Dynamic Vehicle Re-planning stage 130 and the Live Data Collection Units represented by box 160. These inputs are processed and results fed back to the Road Timetable^{™} 110 and Vehicle Route Planner 120. The processing performed by the Post Trip Data stage 170 compares a log of actual delays occurring over time with the planning and re-planning information output at the corresponding time so that deviations can be taken into account in the next schedule determination. This is described in more detail with reference to Figure 8.

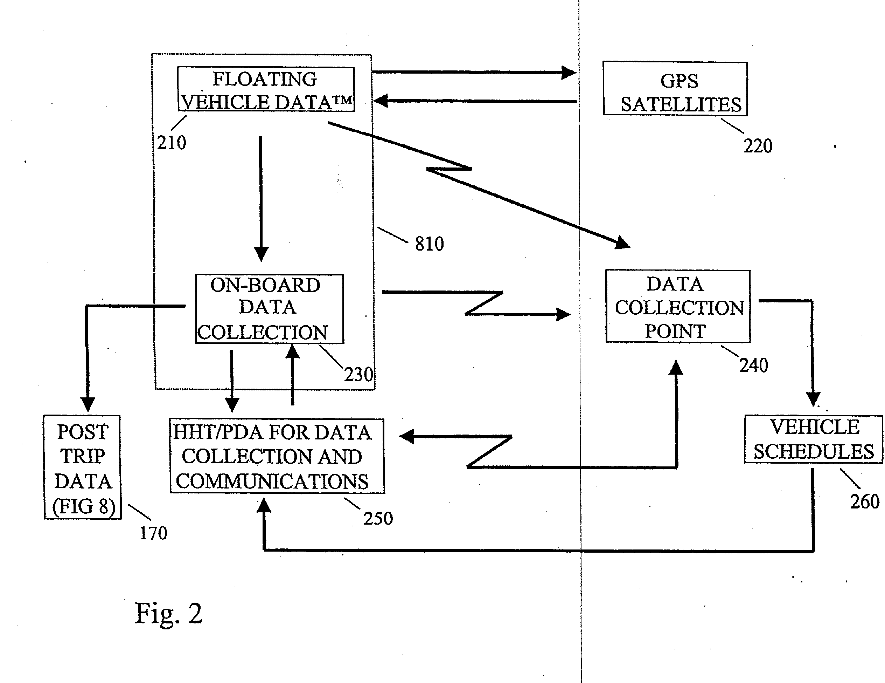

Figure 2 illustrates the technique by which a vehicle collects live data about its position and operational characteristics. This technique is described because the characteristics of live data are used in the generation of the Road Timetable^{™} 110 and in the determination of unpredicted traffic delay. A vehicle which contains a data collection unit is referred to herein as a "probe" vehicle.

The precise location of a probe is defined by its latitude and longitude. This is obtained through calculations on information derived from a Global Positioning System (GPS) receiver fitted to the vehicle. The GPS receiver obtains at least three direct line of site readings from the GPS Satellites 220 using a well known technique to obtain an accurate vehicle location. In Europe such GPS receivers may be obtained from a number of commercial suppliers produced under the Global Automotive Telematics Standard (GATS) issued by Comité Européen de Normalisation CEN. Similar receivers known outside Europe are suitable for use in accordance with the present invention.

A combination of vehicle positions obtained at predetermined time intervals throughout a journey, is known as Floating Vehicle Data 210. This Floating Vehicle Data 210 is the basis for the calculation of vehicle speed and direction of travel at a particular position.

In this embodiment, each probe contains means for transmitting location information and/or information derived therefrom to a central data collection point 240. Floating Vehicle Data 210 may be accumulated on-board the vehicle by a data collection unit 230. This may be stored in a suitable vehicle-bound storage device or transferred to another suitable storage device, such as a Hand Held Terminal (HHT) or a Personal Digital Assistant (PDA) 250. Alternatively, or in additions, the Floating Vehicle Data may be transmitted directly from the data collection unit to a central data collection station 240. Live data may alternatively be sent to the central data collection point 240 via a HHT/PDA 250 by immediate communication using, for example, Short Messaging Service (SMS) or General Packet Radio System (GPRS). A skilled person would be able to select a suitable communications configuration for a particular application.

Where Floating Vehicle Data 210 is accumulated on board, it may be held on-board 230, for example in a Hand Held Terminal (HHT/PDA) 250 for the driver or passenger to use as part of an independent navigation system. In this case, data from the HHT 250 may be transferred to the Data Collection Station 240 later by any suitable means including, but not limited to, historic data direct base station or radio download upon return to base.

Live data from the Data Collection Station 204 may be used by a Vehicle Scheduler 260 to track the progress of vehicles on their predefined route. Historic data will be obtained from the On-board Data Collection function 230 and analysed as Post Trip Data 170 to update the Road Timetable ^{™} (see Figure 8).

Figure 3 is a schematic diagram illustrating the Road Timetable^{™} data store. The positional data is collected throughout a journey from a plurality of Vehicle Probes 310. The Vehicle Probes 310 are distributed over a predetermined geographical area permitting the calculation of historic average vehicle speeds for different types of vehicles on specific road sections at specific times of the day on particular calendar days. In addition, or in the alternative, traffic data may be collected from other sources such as fixed sensors or another technology indicating location (e.g. mobile phones). This historical data resource is called Historic Floating Vehicle Data 320. Historic Floating Vehicle Data 320 is presented as forecast vehicle speeds, classified by type of vehicle and by time of day on a predefined stretch of road. For example, entries in the Road Timetable^{™} 110 may indicate the historic average speed of a freight vehicle, at 15 minute intervals, on the portion of the M1 between junctions 19 and 20, Northbound). The Historic Floating Vehicle Data 320 is passed through a number of statistical analyses stages to determine the average speeds from the plurality of detected vehicle probes 310 for each vehicle type at specific time intervals (e.g. every 15 minutes) and to place more statistical weight upon the more recently collected data.

The information in the Road Timetable^{™} 110 is thus the presentation of the historic traffic speeds averaged over a time period for a specific road length at specific times. This data thus incorporates all predictable traffic delays due to factors such as volume induced congestion of traffic or long term road works. The information in the Road Timetable^{™} 110 is presented such that it can be used in the process of planning vehicle routes and schedules 120. Further, Post Trip data 170 is fed back to enhance the Historic Floating Vehicle Data 320. The Road Timetable^{™} 110 also contains additional data relevant for planning vehicle routes for vehicles of various types. This additional data can be obtained from sources in the public domain 510 and/or from sources outside the public domain 520.

The information contained in Road Timetable^{™} 110 may include different types of information which may be presented in many different forms. The Road Timetable^{™} 110 is preferably presented in electronic form and the data updated periodically by means of a web browser or other suitable means.

Users may choose from a number of criteria known to traffic planners, for example, whether the following information should be made available:
- Road link identification means
- Link length
- Day of the week (of which eight are recognised, namely Sunday to Saturday and Bank Holiday)
- Time of day (in defined intervals)
- Speed through link
- Delay (time)
- Reason for delay (if known)
- Vehicle type
- Inbound links
- Outbound links
- Restrictions in link (for example, low bridge or level crossing)
- Restrictions for use (times when heavy goods vehicles restricted)
- Weight restrictions
- Bridge height or road width restrictions
- Toll charges

The application of the Road Timetable^{™} 110 to the process of planning vehicle routes 120 gives a high level of accuracy in forecasting vehicle speeds for each type of vehicle over a specific road length at a specific time on a predetermined calendar day. For a given type of vehicle, summing the forecast average speeds over the plurality of defined road sections of a journey allows the calculation for expected total driving time on a proposed journey. This is a useful measure because the total driving time in a day is restricted by law in many countries, particularly for drivers of heavy goods vehicles and coaches.

Figure 4 describes how vehicle routes are planned by the traffic scheduling system of Figure 1. In this example, separate resources of a commercial heavy goods operation are regarded as the vehicle (prime mover), the trailer and the driver. This approach to resource management is useful because a round trip for a trailer carrying a delivery load may consist of a delivery to one or more locations and collection of product from one or more locations, with such locations being visited over one or more days and requiring a substantial total mileage to be covered. However, such a trailer may be pulled by more than one prime mover and utilise more than one driver to complete the journey. Although the example given is directed to commercial heavy goods, this is not intended to be limiting. The invention also applies to a multitude of other fields, examples include aviation, rail, shipping, military or emergency services, where other types of separate resource, such as vehicles and crew, might be required. Preferred embodiments also include commercial and non-commercial uses, in which it might only be necessary to monitor either the vehicle or the trailer.

The input parameters 610 for a preferred initial routing and scheduling algorithm 450 include, but are not be limited to: data from the Road Timetable 110, characteristics and availability data 410 of the vehicle; trailer and driver; depot locations 430; customer orders and constraints 420; initial time and distance matrix 440 between all customers drop points, collection points and the depot locations. The distances of the time and distance matrix 440 are calculated by means of an electronic road map using the shortest distance routes between relevant transit points.

These parameters are used by the initial routing and scheduling algorithm 450 to provide initial vehicle routes. Therefore in preferred embodiments, information from the Road Timetable^{™} 110 is input to a routing and scheduling algorithm 450 to provide optimised routes based on accurately predicted travel times. The routing and scheduling algorithm 450 outputs the optimised route and predicted travel times to a scheduler interface unit 460. The scheduler interface unit 460 has an interface allowing, where desired, manual adjustment of parameters and reprocessing of the routing and scheduling algorithm 450 to provide accepted planned vehicle routes 470. Therefore it is not mandatory for an operator to accept the recommended routes(s) and he may instead wish to impose criteria, route sections and/or entire routes. In this embodiment, the accepted vehicle routes 470 are the basis for both the fleet performance reporting 480, via incorporation into the post-trip data 170, and any subsequent dynamic vehicle re-planning 130.

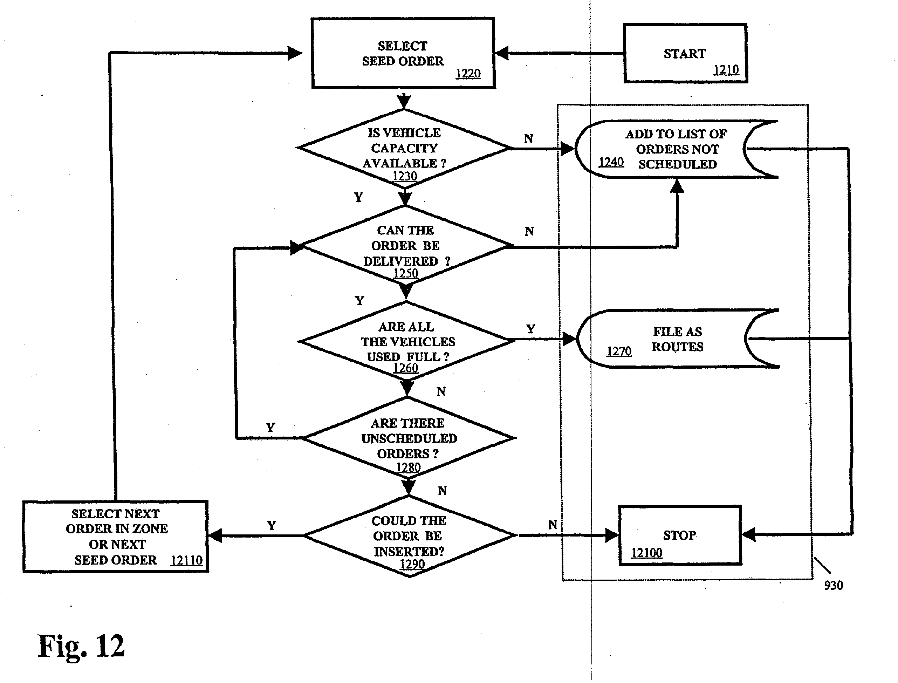

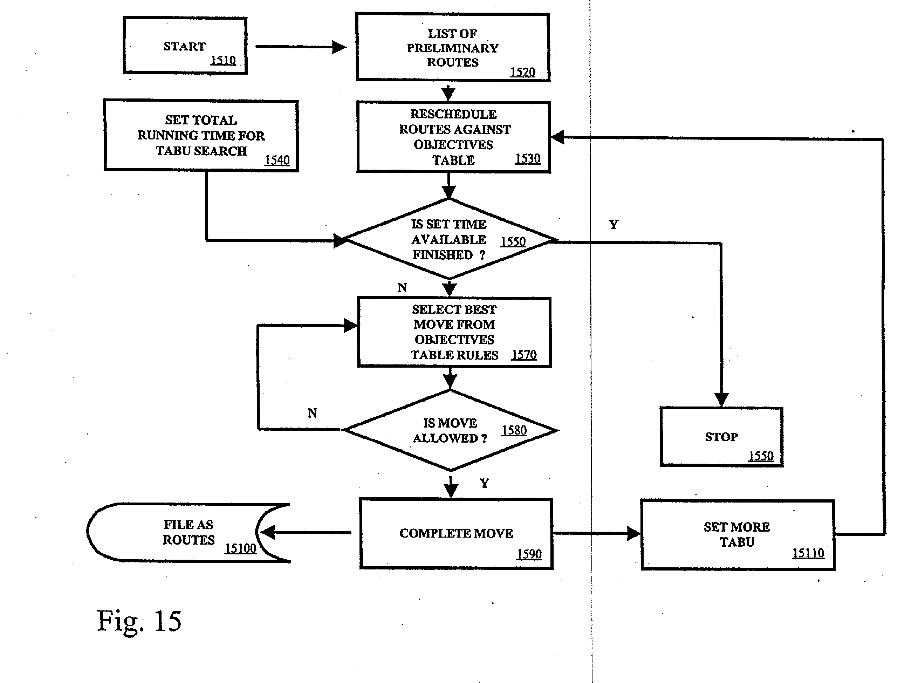

In the initial routing and scheduling algorithm 450 vehicle speed is input via parameter 410 and is applied to calculate the travels from the time and distance matrix 440. The application of Road Timetable^{™} information 110 as a parameter in the initial routing and scheduling algorithm 450 allows speeds along the route considered in the algorithm to be represented as a forecast speed for each specific road length at the appropriate time in the relevant day of the week. The application of the Road Timetable^{™} information 110 in this way may make one or more routes unfeasible owing to the available drivers time input as one of the characteristics and driver availability parameters 410. Under such circumstances the algorithm will utilise specific operations research techniques, such as parallel insertion or Tabu search (shown later in figures 12 & 15 respectively), to reallocate customer orders and customer collections to alternative vehicles.

For implementation reasons, a skilled person may decide to process Road Timetable information 110 as a further phase performed after an initial processing of the vehicle routing and scheduling algorithm 450, as will be described in more detail hereinafter. A skilled person will appreciate there are other ways of incorporating Road Timetable^{™} information 110 into the routing and scheduling process.

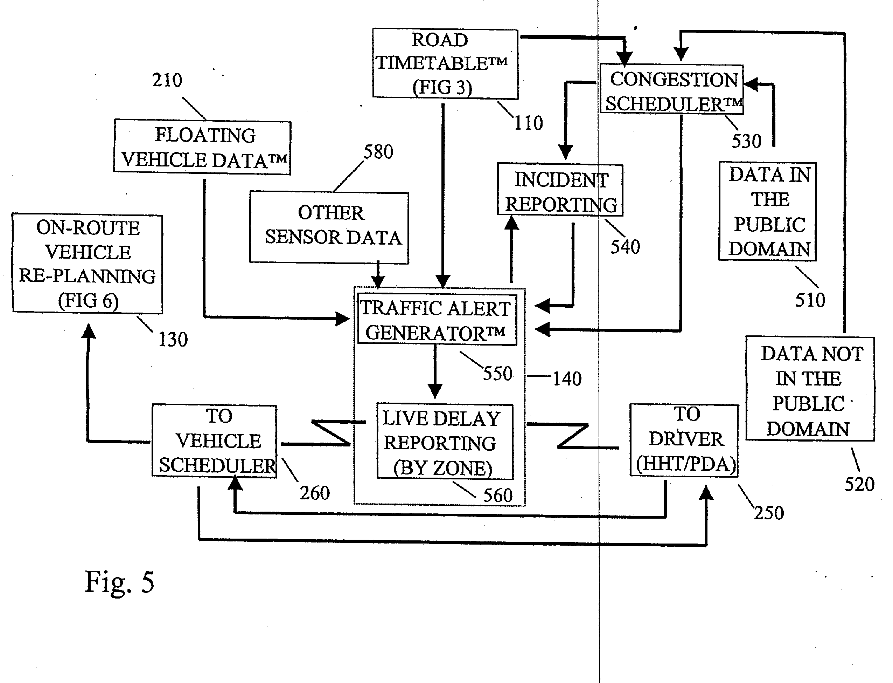

Figure 5 illustrates functions of the live traffic delay reporting stage 140 which compares the actual (real time) traffic speeds from individual vehicle probes providing Floating Vehicle Data^{™} 210 with the forecast traffic speed (by type of vehicle) reported on the Road Timetable^{™} 110.

The Traffic Alert Generator^{™} module 550 is the comparison and quality control routine from which the live delay reporting information 560 is generated. This module can identify unpredicted traffic delays as well as improvements in traffic speeds having regard to the record in the Road Timetable. In this embodiment, the Traffic Alert Generator^{™} 550 first selects vehicle probes, preferably based on a probability function reflecting the likelihood of the vehicle being on the relevant road section, to determine in real time from the selected vehicle probes specific aspects of Floating Vehicle Data 210. In this example, the criteria sampled include the traffic speed by vehicle type over a specific road section at a specific time of the day. These criteria are compared with the forecast speed by type of vehicle on the corresponding road section at the appropriate time on the same day from the Road Timetable 110. Any significant deviation is indicated by the Traffic Alert Generator to the Congestion Scheduler by means of traffic delay incident reporting 540 and recorded within the Traffic Alert Generator for live delay reporting 560 to either the Vehicle Scheduler 260 or direct to a driver 570.

The actual live data obtained from the vehicle probes or other sensor data 580 is compared with the predicted speed held in the Congestion Scheduler 5 30 and any significant variance reported back to the Traffic Alert Generator 550 through the live delay reporting 560 system. The Congestion Scheduler^{™} 530 is a database of known incidents which are likely to cause traffic delays. The data on each incident recorded in the Congestion Scheduler^{™} is obtained either from the public domain 510 or from a source outside the public domain 520. An example of a source outside the public domain is a police force providing an escort for a slow moving wide load, such a source typically being able to provide speed and route information. The Congestion Scheduler^{™} 530 also includes a database of earlier incidents to apply 'artificial intelligence' techniques to predict potential delays incurred by an incident from the moment one is detected. The Congestion Scheduler^{™} 530 is issued to users as a separate database or is available on the Internet or the like. When the reason for a traffic delay incident 540 is established and verified by other sensor data 580 or the traffic alert generator 550, then the information is passed to the live reporting system 560.

Following the determination of a traffic delay by the Traffic Alert Generator^{™} 550, the live delay reporting system 560 sorts the delays by geographic zone, for example by postcode (zip code or other area classification means) and reports these to drivers 570 in the relevant post code (zip code or other geographical zone) by means of a suitable communication system, such as SMS or GPRS, possibly utilising HHT or PDA 250 or a Radio Traffic System - Traffic Messaging Centre (RDS-TMC). The live delay reporting system 560 also reports the geographically classified delays to vehicle schedulers in step 260. Where a vehicle scheduler is a person the delay may be reported, for example, direct to a desk top computer in order that they may take-on-route vehicle re-planning 130. Where the scheduler is a computer implemented system, the delay may be reported to an appropriately figured Applications Programmer Interface (API), for example to the dynamic vehicle re-routing module 130 of Figure 1.

All incidents logged in the Traffic Alert Generator® 550 are monitored by means of Floating Vehicle Data 210 until the incident is cleared. This type of historic data is also maintained in the database to be used as part of an 'artificial intelligence' system to predict the length, in time, of any incident on a specific journey. By comparing real time Floating Vehicle Data 510 indicating actual vehicle speed over a specific road section at a specific time of day on a specific day of the week with the forecast vehicle speed calculation in the Road Timetable^{™} 110, which is classified in the same way, unpredicted traffic delays or unpredicted improvements in traffic speeds are identified as occurrences which produce a significant variation. The identification, verification, calculation and reporting of such occurrences or incidents, with reasons, to users or route-planning/re-routing applications is a useful service.

Figure 6 describes the dynamic vehicle re-planning process 130 which is employed when significant unpredictable traffic delays occur. Such re-routing may be necessary in the event of unpredicted traffic delays in commercial heavy goods vehicles for example in order to either achieve the customer service levels required or to maximise the drivers' potential driving time within recognised legal limits, if any apply. However, as noted above, this is not limited to commercial heavy goods systems. Dynamic vehicle re-planning could feasibly be of use in a variety of other systems including the examples noted above. In practice, a maximum tolerable length of unpredictable delay is predetermined and when this threshold is exceeded a re-planning process is initiated. The value of the threshold in time depends on the application.

From a knowledge of vehicle routes in use 470, unpredictable live traffic delays reported by geographical zone 560 and the existing vehicle scheduling parameters 610 it is possible to re-route vehicles already embarked upon planned journeys using a dynamic vehicle re-routing and scheduling algorithm 620. The purpose of the dynamic re-routing and scheduling algorithm 620 is to provide a new route for undertaking all planned stops for any vehicle which is subject to an unpredicted traffic delay. This process depends upon being able to indicate the current position, direction and speed of a delayed vehicle by means of a probe and live vehicle progress monitoring 150.

The dynamic vehicle re-routing and scheduling algorithm 620 determines a number of new route options by means of 'artificial intelligence' in a predetermined priority order for each vehicle effected by an unscheduled traffic delay or improvement in traffic speed above that forecast in the Road Timetable^{™} 110 used in the calculation of the original pre-event planned routes 470. The dynamic vehicle re-routing and scheduling algorithm 620 may consider, for example, one or more of the following options in the event of a delay:
- Extending the drivers driving and working time to maximum permitted hours in that day or the next day.
- Despatching another driver (with sufficient driving and working time available) to a pre-selected point to relieve the first driver and complete the work.
- Deleting one or more collection and using another vehicle combination to undertake this work.
- Delaying a non-critical customer drop until the next day.
- Returning a customer drop, duplicating the order picking and sending another vehicle combination out later to undertake the delivery. Returning the original order to stock upon return of the delayed vehicle combination.
- Dropping the trailer at pre-selected point for another driver to collect and complete the work (including drivers of third-party operators).
- Dropping the trailer at pre-selected point and asking the customer to collect it and deliver the load (for example if a third-party logistics firm undertakes the collection and delivery for the customer).

The dynamic re-routing and scheduling algorithm 620 will present alternative solutions to a vehicle scheduler interface 607. The scheduler interface 607 confirms the recommended changes or can select an alternative. Once the vehicle scheduler 607 has confirmed a selection the dynamic vehicle re-planning module 130 will communicate to the drivers concerned 250 actions to taken by the selected communication means, for example, SMS or GPRS.

The dynamic re-routing and scheduling algorithm 620 stores the selected changes to track the progress of the changes at selected time intervals. The stored changes are also available in the database for the 'artificial intelligence' function. The tracking of the vehicle ("prime mover") and the load ("trailer") are preferably undertaken separately, in accordance with the separate consideration of these entities in the re-routing and scheduling algorithm 620 (and the routing algorithm 450). This allows efficient routing and scheduling when for example a new prime mover collects a trailer and completes the work or another driver is despatched to complete the work. In the event that progress monitoring of a change shows, further delays outside the accepted parameters then an exception message will recommend to the scheduler 460 that the route is re-planned again. This process may be reiterated for either a single vehicle or vehicle-load combination as well as for multiple vehicles and vehicle-load combinations.

Following the identification of a significant unpredicted traffic variation the application of the on-route vehicle re-planning, by means of a combination of dynamic vehicle routing and scheduling techniques and, optionally, 'artificial intelligence' techniques together with communications to the vehicle and the monitoring of the vehicle progress (or vehicles progress) after the route re-planning process provides a significant increase in performance with preferred embodiments.

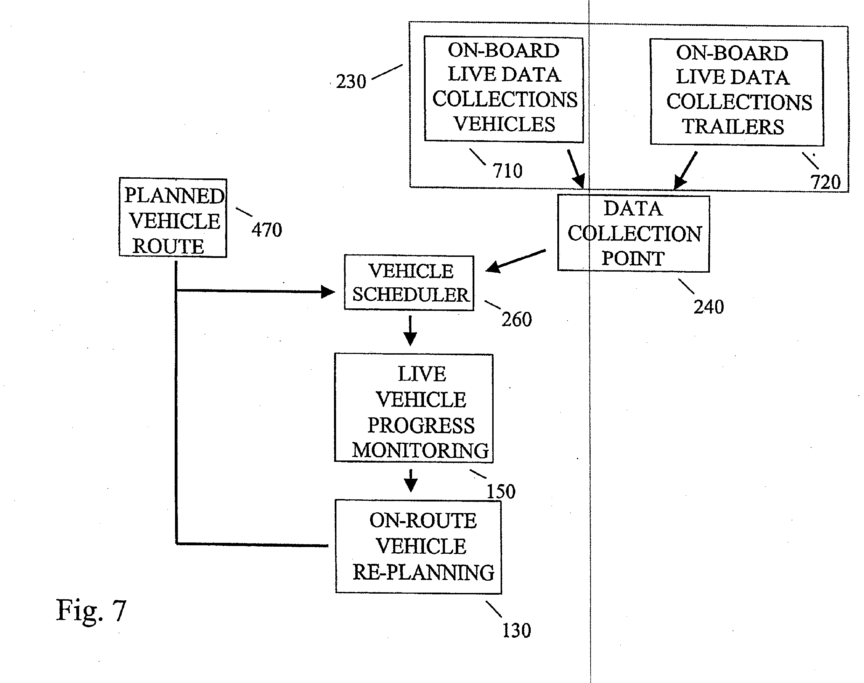

Figure 7 describes the live vehicle monitoring system 150 which is required in order to both determine the existence and extent of any unpredicted traffic delays and to confirm the location, direction and speed of the vehicle for on-route vehicle re-planning and monitoring requirements.

The vehicle scheduler 260 knows the planned vehicle route 470 and checks the progress of any vehicle on a pre-defined vehicle route 470. This is achieved using live tracking through a data collection point 240 receiving on-board information 230 from the vehicle probes on either (or both) a vehicle 710 or a trailer 720. This live tracking data is required for the scheduler to map the progress of a vehicle and/or the trailer 150 and to determine whether to undertake dynamic vehicle re-planning 130 in the event of a traffic delay or improvement. Live vehicle monitoring also allows the vehicle scheduler to confirm that a vehicle or trailer is heading towards or is in a reported traffic delay.

Figure 8 identifies the post trip data 170 requirements and is essentially a feedback loop providing up to date data for the Road Timetable^{™} 110. Post trip data 170 is collected from two sources: firstly, floating vehicle data collection 810, for example from the vehicle probes either collected live or stored on the vehicle and downloaded as required and secondly, data from the dynamic vehicle re-planning 130 process. All data collected is validated 820 and then presented in a post trip database 170. The post trip data is subsequently used to both up date the Road Timetable^{™} 110 and to provide fleet performance reporting 480 including comparing actual activity from the Floating Vehicle Data 810 with the planned vehicle routes 470.

The activities of collection, validation and application of the post trip data facilitate updating of the Road Timetable^{™} 110. This process also measures the quality of information from the Road Timetable^{™} 110, when there were no unpredicted incidents, by virtue of it being a measure of the difference between the predicted traffic speed as indicated in the Road Timetable^{™} 110 and the actual traffic speeds achieved over a specific road length at specific times of the day for a particular day of the week. The post trip data 170 is also used as a quality check upon the data initially presented and used.

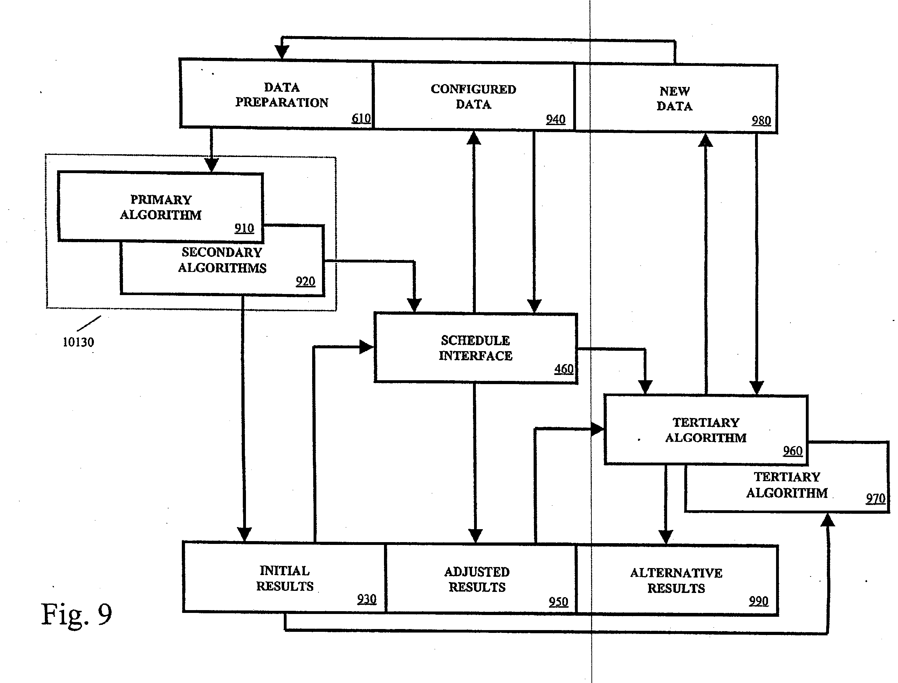

Figures 9-18 show in more detail a preferred embodiment for a method and system for traffic planning and dynamic vehicle re-planning.

With reference to Figure 9, the initial data scheduling parameters 610 are used to run a primary algorithm 910 and then a secondary algorithm or algorithms 920. This provides initial results 930. These initial results 930 are then subject to consideration by the scheduler interface 460 using configured data 940 and/or adjusted results 950. There is then the option to use either or both the initial results 930 or the adjusted results 950 as the input data for a tertiary algorithm 960 or algorithms 970. These tertiary algorithms may represent further improvement phases so as to further modify the results previously achieved. Alternatively they may also combine new data 980 (which may, for example, include live delay reporting 560 and/or live vehicle progress monitoring 150), enabling previous results 930 and 950 to be modified in accordance with changes in circumstances, for example to enable dynamic vehicle re-planning 130.

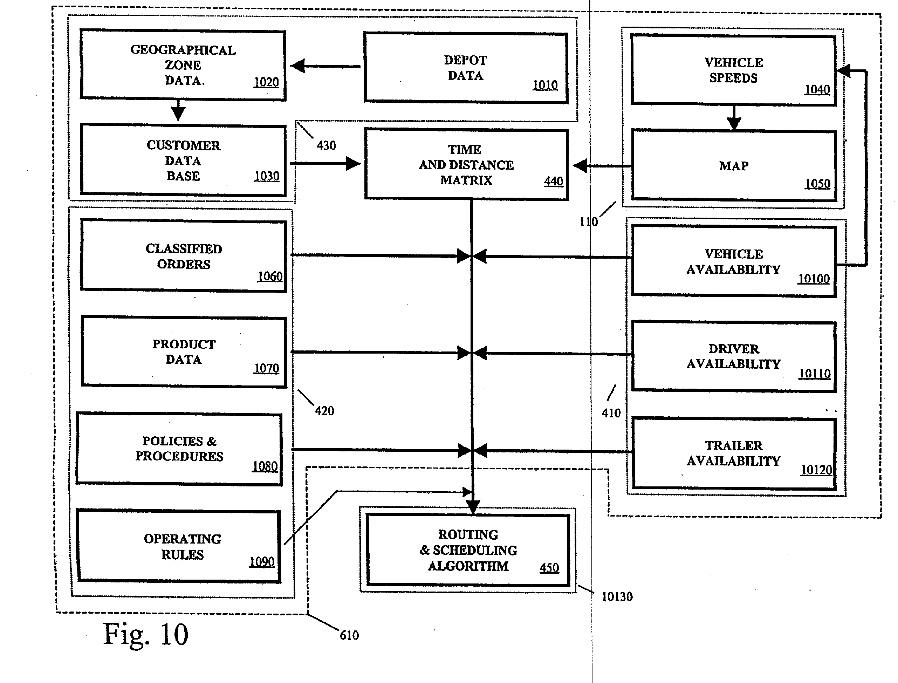

Figure 10 illustrates the input data requirements for deriving a planned vehicle route 470. These include but are not limited to:
- a distribution depot 1010 referenced by location and activities;
- the territory broken into geographical zones by a number of postcodes or other means 1020;
- customer database 1030 giving for example, address, access times, access restrictions and type of mechanical handling equipment if required;
- data on vehicle speeds 1040 combined with a map 1050 referred to herein as a road timetable 110;
- the use of depot locations 430 and road timetable 110 to produce a time and distance matrix 440;
- a table of orders classified into priorities by, for example, customer grouping or day of the week for delivery 1060;
- products data 1070 classified for example by priority of delivery or amount;
- policies and procedures 1080 which for example, outline vehicle loading restrictions for each product group;
- operating rules 1090, either for the product (for example, temperature at which the product must be carried), or for the vehicle (for example, weight restrictions and lorry bans);
- vehicle availability 10100 described for example, by vehicle type, carrying capacity and/or operating shifts for which they are available for use;
- driver availability 10110 described for example, by vehicle licence class, training level in mechanical handling equipment and/or shift availability (according to contracts of employment and prevailing drivers' hours rules);
- trailer availability 10120 described for example, by carrying capacity or specificity of goods.

This combination of data may then be input into the routing and scheduling algorithm 450, which may be a series of algorithms 1130 for example a primary algorithm 910 and a secondary algorithm 920 or further algorithms. Such algorithms may for example be a sequential insertion based algorithm or a parallel insertion based algorithm depending on preference.

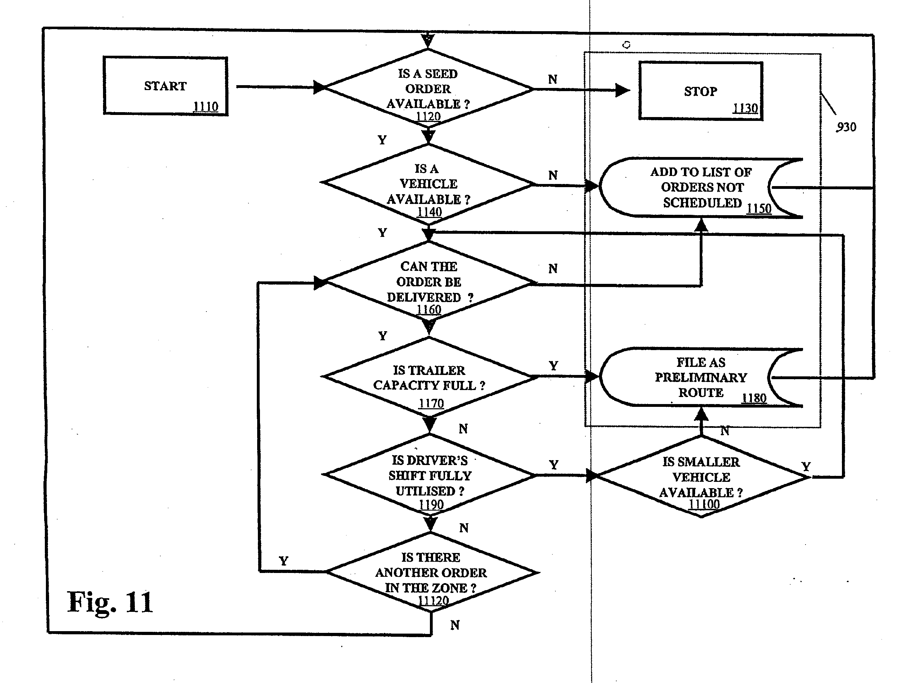

Figure 11 displays a possible sequential insertion based algorithm which might be used as a primary algorithm 910. This utilises a series of sequential questions answered by reference to the input data shown in Figure 10. Beginning at start 1110 a first question is asked 1120. Is a seed order available? A seed order is an unscheduled customer order in the furthest geographical zone from the depot. If the answer is no the algorithm stops 1130 as there is no order to process. If the answer is yes, the algorithm moves on to question 1140, .... is a vehicle available? If the answer is that there is no vehicle available, the order is added to a list of orders not scheduled 1150. If the answer is yes the algorithm checks if the order can be delivered 1160. Again, if the answer is no as the order cannot be delivered it is added to a list of orders not scheduled 1150. If the answer is yes the algorithm checks if the trailer capacity is full 1170. If the answer is yes, the trailer capacity is full, this may be filed as a preliminary route 1180. If the answer is no the algorithm looks to see if the driver shift is fully utilised 1190. If the driver shift is fully utilised, the algorithm checks if a smaller vehicle is available 11100. If the answer is no then this may be filed as a preliminary route 1180. If the answer is yes the algorithm returns to the question 1160 and moves through the process again. Alternatively if the answer to question 1190 is no then question 11120, is there another order in the zone, is asked. If the answer is yes the algorithm returns to question 1160. If the answer is no this is then filed as a preliminary route 1180.

Figure 12 represents a possible parallel insertion based algorithm which may be used as an alternative, or in addition to, the sequential insertion based algorithm shown in Figure 11. Beginning at start 1210 a seed order is selected 1220. The algorithm then checks if the vehicle capacity is available 1230. If there is no vehicle capacity available this is added to a list of orders not scheduled 1240. If capacity is available the algorithm then checks to see if the order can be delivered 1250. If the answer is no the selected seed order 1220 is added to a list of orders not scheduled 1240. If the answer is yes the algorithm checks if all vehicles are full 1260. If the answer is yes this may be filed as a route 1270. If the answer is no the algorithm checks whether there are unscheduled orders 1280. If the answer is yes the algorithm returns to question 1250 and moves through the process again. If the answer is no the algorithm checks if the order could be inserted 1290. If the answer is no the algorithm stops 12100 as the order cannot be delivered. If the answer is yes the algorithm either selects the next order in the zone or the next seed order 12110, and returns to question 1220.

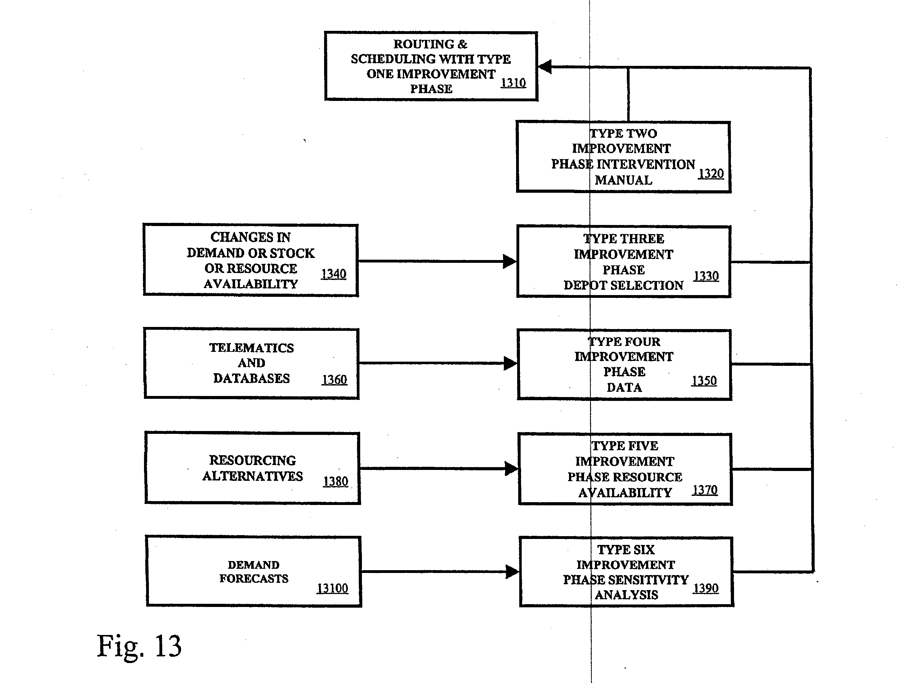

Once filed as a route the scheduler interface 460 may accept these routes. In which case routes 1180 or 1270 will become a planned vehicle route 470. A scheduler interface 460 may also decide to accept a stop result 1130 or 12100, or an addition to the list of orders not scheduled 1150 or 1240. Alternatively, the scheduler interface may decide to utilise one or more improvement phases, as described having regard to Figures. 13-15. Each improvement phase will aim to reduce overall operating costs further and be targeted at a specific new requirement or requirements. Each improvement opportunity may require a specific operations research technique to provide an acceptable solution which reduces costs.

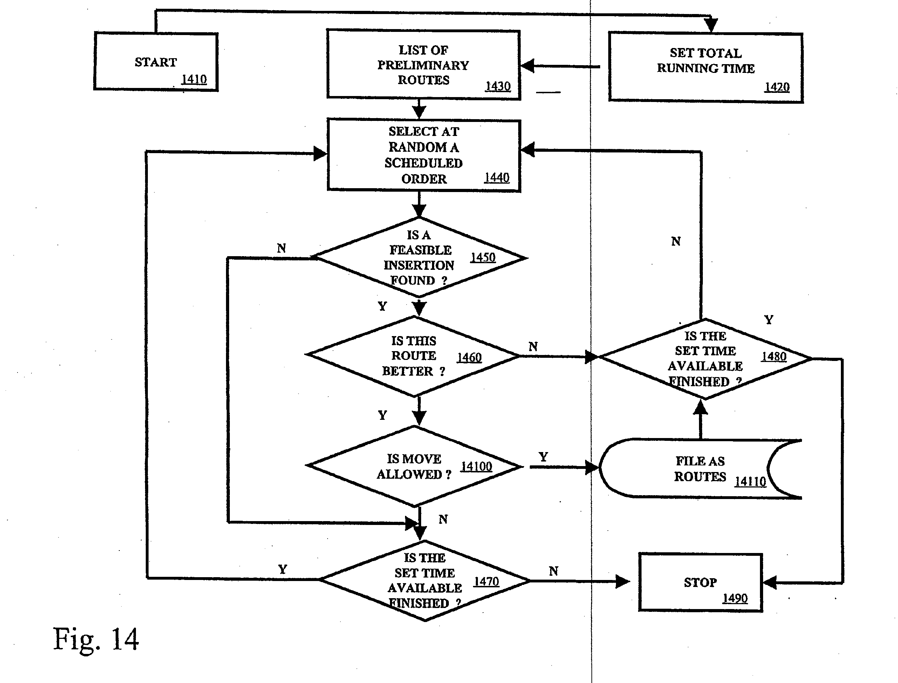

Figure 13 illustrates a number of options for improving the first solution produced by employing one or more improvement phases. Type one improvement phase 1310 involves running an additional algorithm in order to improve the solution already provided. When used alone this may be a tertiary algorithm 960 or may involve multiple tertiary algorithms, for example 960 and 970. An example of such algorithm might be a Tabu search algorithm (see Figure 15) and/or a simulated Annealing algorithm (see Figure 14). When type one improvement phase 1310 is used with an additional improvement phase, the second algorithm may involve repeating the initial algorithm or algorithms 10130 with modified data. This may be instead of or in addition to the use of a tertiary algorithm 960 or algorithms 960 and 970.

A type two improvement phase 1320 involves manual intervention, changing or adding to the input data to produce configured data 940. This may then be used to rerun the algorithms already in use 10130. Note that as an alternative embodiment to manual intervention a type two improvement phase could instead be based around a computer facilitated intervention.

A type three improvement phase would involve selecting a depot for which the delivery is to be made to each customer 1330. This may be in response to changes in demand or stock or resource availability 1340. In this improvement phase a customer order 420 may be split and delivered directly (or indirectly) from two or more depots.

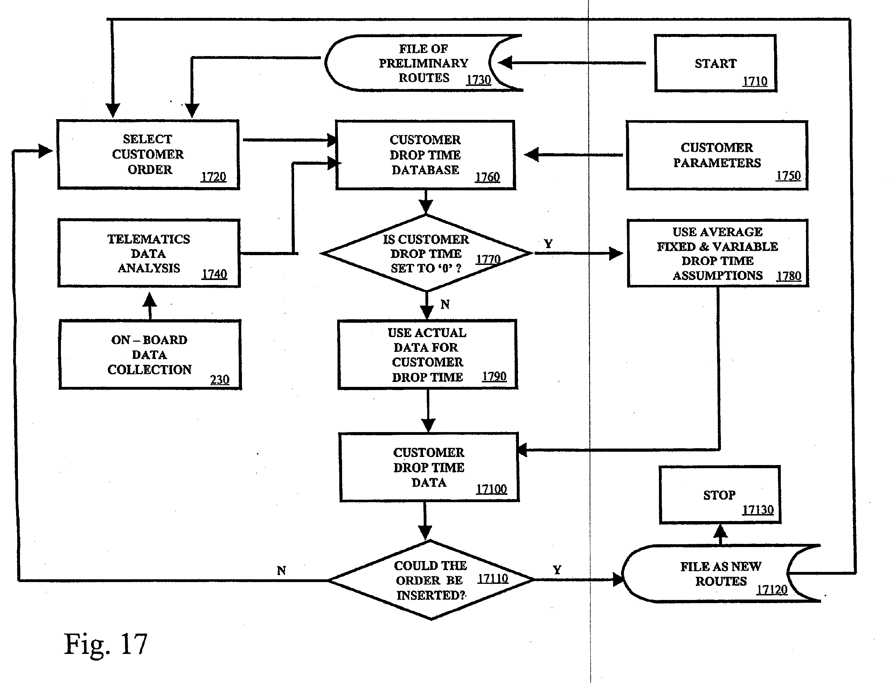

Type four improvement phase 1350 involves correcting the input data where alternatives are known and data gathered upon the previous vehicle runs. For example this would include the use of telematics data 1360 to correct the speed of a particular type of vehicle of a defined stretch of road at a specific time of day as recorded in a road timetable 110 (see Figure 17).

Type five improvement phase 1370 assesses the impact of using alternative resources 1380 for example different vehicle size configurations of specific changes in input data such as the impact of customer drop time delays.

Type six improvement phase 1390 alters the data so as to assess the impact of the changes in customer demand 13100.

By adapting the data and running multiple algorithms as described above a variety of commercial traffic scheduling issues can be addressed via generating the customer specific data entry at the front end, suitable selection of algorithm running times (to obtain speed of response) and a security of the solution being addressed by a selection as a requirement by the user, each requirement being solved by a specific algorithm and providing specific outputs.

The various algorithms allow the user the option of limiting cost by means of either minimising the number of vehicles used or by minimising the number of miles travelled. Each algorithm is designed to prepare the data then once set up by the operator have a run time of less then one minute on present computing systems for a 500 customer order problem and less than two and a half minutes for a 1000 customer order problem. Figures 14-18 show a variety of algorithms which may be used in practice.

Figure 14 represents a possible simulated annealing improvement algorithm. Starting at 1410 the total running time is first set 1420. A scheduled order is selected at random 1440 from a list of preliminary routes 1430. The algorithm checks to see if it is a feasible insertion 1450. If not and there is still time available 1470 another order is selected at random 1440 and the process begins again. If there is a feasible insertion 1450 the algorithm then checks if this route is better 1460. If not and there is time available 1480 then the algorithm returns to 1440 and carries on. If there is no time available the algorithm stops 1490. If the route 1460 is better the algorithm then checks if the move is allowed 14100. If it is allowed it is then filed as a route 14110. If not the algorithm checks if the set time available is finished 1470 by returning to 1440 if there is time available or stopping 1490 is the time available is finished.

Figure 15 represents a possible Tabu Search improvement algorithm. Starting at 1510 a list of preliminary routes 1520 is used to reschedule the routes against objectives in a table 1530. The total running time of the first Tabu search has been previously set 1540 and if the time available is then finished the algorithm comes to a stop 1550. If time available is not finished 1560 the algorithm then selects the best move from the objective table rules 1570 - these are a set of key parameters defined by the scheduler. The algorithm checks if this move is allowed 1580. If not the algorithm returns to 1570 to select the best remaining rules in the objective table rules. If the move is allowed the algorithm completes the move 1590. This is then filed as route 15100. More Tabu are then set by changing the key parameters and the algorithm returns to 1530 and moves through the process again.

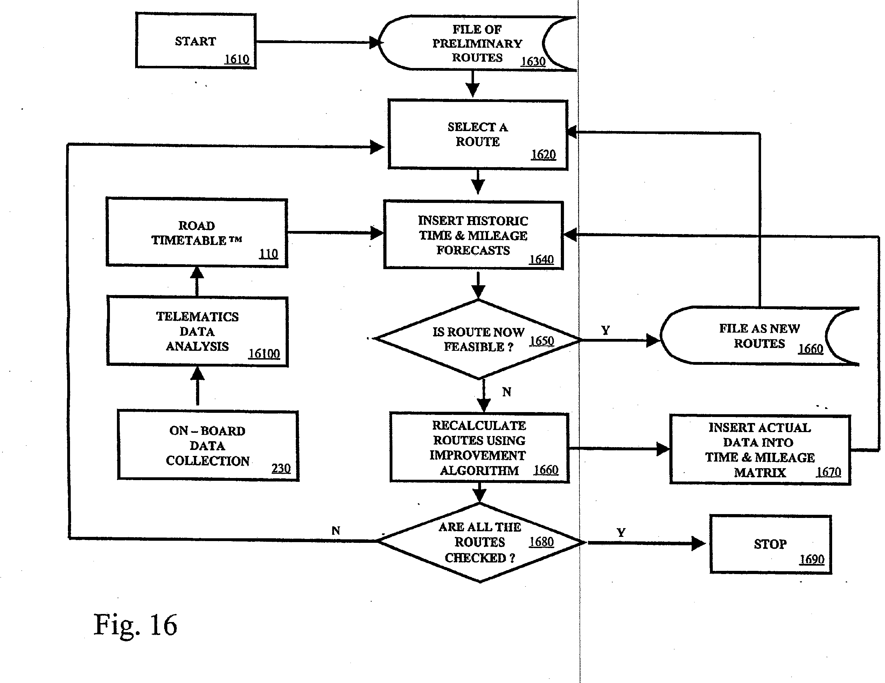

Figure 16 represents an algorithm used to calculate the impact of potential traffic congestion. Starting at 1610 a route is selected 1620 from a file of preliminary routes 1630. Historic time and mileage forecasts 1640 are built up by subjecting data derived from on board data collection 230 to telematics data analysis 16100 to produce a road timetable 110. The historic time and mileage forecasts 1640 are then derived from this road timetable 110. A comparison of this route is made with a start time and mileage forecasts 1640 to check if the route is now feasible 1650. If the route is feasible it is filed as a new route 1660 and the algorithm returns to 1620 selecting a new route to repeat the process. If the route is not feasible 1650 the route is recalculated using an improvement algorithm 1660. The resultant data is then inserted into the time and mileage matrix 1670, the system then returning to 1640 to repeat the process. If after recalculating with an improvement of algorithm 1660 all the routes are checked 1680 then the system stops 1690. If all the routes are not checked the system returns to 1620, selecting a new route to repeat the process.

Figure 17 illustrates an algorithm for calculating the impact of customer drop time delays. Starting at 1710 a customer order is selected 1720 from a file of preliminary routes 1730. Data collected from on board data collection 230 is subjected to telematics data analysis 1740 and combined with customer parameters 1750 to produce a customer drop time database 1760. The selected customer order is then fed into the customer drop time database 1760. The algorithm then checks if the customer drop time is set to zero 1770. If it is, average fixed and variable drop time assumptions are used 1780. If the customer drops time is not set to zero then the actual data of the customer drop time is used 1790. In either case this produces customer drop time data 17100. Using this data 17100 to indicate the time delay, the algorithm then checks if this order could be inserted 17110. If not the algorithm then returns to 1720 selecting a new customer order and repeating the process. If, taking into account the delay time, the order could be inserted 17110 the order is then filed as a new route 17120 and the algorithm either stops 17130 or returns to 1720 to select a new order to repeat the process.

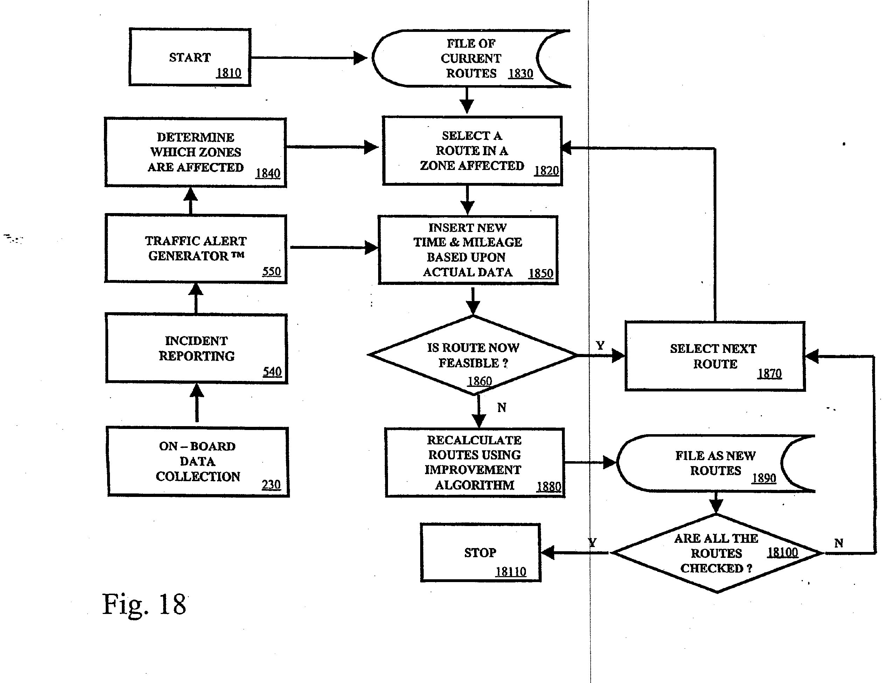

Figure 18 represents an algorithm which can be used for dynamic vehicle re-planning. Starting at 1810 a route is selected 1820 from a file of current routes 1830. The route selected is in an affected zone 1820. The affected zones are determined 1840 from the use of on board data collection 230 and incident reporting 540 by the traffic alert generator 550. The traffic alert generator 550 allows new time and mileage based upon actual data to be inserted into the selected route 1850. The algorithm then checks if this new route is feasible 1860. If the route is still feasible then the algorithm selects a new route 1870 and repeats the process. If the change indicated by the traffic alert generator means that the selected route is now no longer feasible the route is recalculated using an improvement algorithm 1880. The output from this is then filed as a new route 1890. The algorithm then checks if all the routes are checked 18100. If not a new route is selected 1870. If all the routes are now checked the algorithm stops 18110.

It can be seen then that through a combination of real time monitoring from a variety of sources, the use of historical traffic data, and the selection of appropriate modifications and algorithm manipulations, routes can be planned and dynamically adjusted, taking into account a wide variety of different requirements, conditions and changing circumstances. Preferred embodiments thus benefit from a combination of the predicted traffic speeds offered by the Road Timetable^{™} used in pre-event planning of vehicle routes and schedules and live vehicle tracking which forms part of the live traffic delay reporting, which takes into account unpredicted traffic delays or improvements providing an opportunity for dynamic vehicle re-routing. In addition, the collection of post trip data is used to refine future predictions.

Particular advantages of the preferred embodiments include collection and application of traffic data for use in pre-event planning of vehicle trips and post-event real time re-planning in the event of an unpredicted traffic incident occurring while the vehicle is on its planned trip.

The various apparatus modules described herein may be implemented using general purpose or application specific computer apparatus. The hardware and software configurations indicated for the purpose of explaining the preferred embodiment should not be limiting. Similarly, the software processes running on them may be arranged, configured or distributed in any manner suitable for performing the invention as defined in the claims.

## Claims

1. A method of operating a traffic scheduling computer system (100) for planning journeys (120) for delivery resources comprising multiple elements considered separate but interrelated resources wherein the multiple elements comprise one or more of at least one trailer, at least one vehicle and at least one vehicle crew, each journey having a plurality of transit stopping points, the method comprising:
receiving scheduling criteria including transit stopping point data and further including availability data for the one or more of the at least one trailer, the at least one vehicle and the at least one vehicle crew;
receiving map data, said map data comprising one or more routes, each route defined by a plurality of route-sections;
receiving forecast speed information for a traffic unit on each said route-section, the forecast speed for a given route-section depending on historical speed data for that route-section at a predetermined time on a particular day; and
planning a journey (120) including a plurality of transit stopping points in dependence on the scheduling criteria including the availability data for the one or more of the at least one trailer, the at least one vehicle and the at least one vehicle crew and forecast speed information.

2. A method as in claim 1, wherein at least a portion of the planned journey is re-planned (130) according to re-scheduling criteria after the traffic unit has embarked upon the journey.

3. A method as in claim 2, wherein said re-planning step (130) is triggered in response to an unpredicted traffic event or operational failure.

4. A method as in any preceding claim, wherein one or more of said planning (120) or re-planning (130) steps depends on unpredictable event data.

5. A method as in claim 4, wherein said unpredictable event data comprises live traffic reports.

6. A method as in claim 4 or 5, wherein said unpredictable event data comprises data derived from live traffic monitoring.

7. A method as in any preceding claim, wherein a first journey solution is determined in a first algorithm processing step and an improved journey solution is determined in a further algorithm processing step.

8. A method according to any preceding claim, wherein said scheduling criteria comprise one or more of: availability data (410) of the separate but interrelated resources; distance data between relevant transit stopping points; time data representing a time of day; depot data (1010); customer data; and product data (1070).

9. A method according to claim 8, wherein said availability data (410) comprises availability data (410) for one or more of: a prime mover; and a driver.

10. A method as in any of claims 3 to 9, wherein unpredictable events are categorised according to a geographic region in which they occur and information on the unpredictable event is communicated to traffic units associated with a relevant geographical region.

11. A method as in any preceding claim, wherein said forecast speed information for a route-section is recorded and compared with actual speed data for that route-section in order to provide a measure of reliability.

12. A method as in any preceding claim, wherein said forecast speed information for a route-section is recorded and compared with actual speed data for that route-section in order to feedback an input to the traffic scheduling system (100).

13. A method as in any preceding claim, wherein historical speed data is acquired by means of floating vehicle data collection units or other mobile data collection means.

14. A method as in any of claims 3-13, wherein live traffic monitoring is performed by means of floating vehicle data collection units or other mobile data collection means.

15. A method as in claim 13 or 14, wherein a floating vehicle probe is selectively activated for monitoring based on a probability of the traffic unit carrying the probe being on a predetermined route-section.

16. A computer program product comprising program code means adapted to control the method of claim 1.

17. A computer system (100) for scheduling traffic capable of planning journeys (120) for delivery resources comprising multiple elements considered separate but interrelated resources wherein the multiple elements comprise one or more of at least one trailer, at least one vehicle and at least one vehicle crew, each journey having a plurality of transit stopping points, the system (100) comprising:
means for receiving scheduling criteria including transit stopping point data and map data and further including availability data for the one or more of the at least one trailer, the at least one vehicle and the at least one vehicle crew, said map data comprising one or more routes, each route defined in terms of a plurality of route-sections;
a data repository comprising historical speed data for each route-section, historical speed data for a particular route-section being represented for a predetermined time on a particular day;
means for generating forecast speed information for a traffic unit on each said route-section based on said historical speed data; and
processing means for planning a journey (120) including a plurality of transit stopping points in dependence on said scheduling criteria including the availability data for the one or more of the at least one trailer, the at least one vehicle and the at least one vehicle crew and forecast speed information.

## Patentansprüche

1. Verfahren zum Betreiben eines Verkehrsplanung-Computersystems zur Planung von Reisen, wobei jede Reise eine Vielzahl von Transitpunkten aufweist, wobei das Verfahren Folgendes aufweist:
Empfangen von Planungskriterien, die Transitdaten aufweisen;
Empfangen von Kartendaten, wobei die Kartendaten eine oder mehrere Routen aufweisen, wobei jede Route durch eine Vielzahl von Routenabschnitten definiert ist;
Empfangen von vorhergesagten Geschwindigkeitsinformationen für eine Verkehrseinheit an jedem der Routenabschnitte, wobei die vorhergesagte Geschwindigkeit für einen vorgegebenen Routenabschnitt von historischen Geschwindigkeitsdaten für den betreffenden Routenabschnitt zu einer vorbestimmten Zeit eines bestimmten Tages abhängt; und
Planen einer Reise mit einer Vielzahl von Transitpunkten in Abhängigkeit von den Planungskriterien und vorhergesagten Geschwindigkeitsinformationen.

2. Verfahren nach Anspruch 1, wobei mindestens ein Teilbereich einer geplanten Reise entsprechend Neuplanungskriterien neu geplant wird, nachdem die Verkehrseinheit die Reise angetreten hat.

3. Verfahren nach Anspruch 2, wobei der Neuplanungsschritt in Abhängigkeit von einem nicht vorhergesehenen Verkehrsereignis oder betrieblichen Ausfall ausgelöst wird.

4. Verfahren nach einem der vorstehenden Ansprüche, wobei einer oder mehrere der Planungs- oder Neuplanungsschritte von unvorhergesehenen Ereignisdaten abhängen.

5. Verfahren nach Anspruch 4, wobei die unvorhersehbaren Ereignisdaten Live-Verkehrsberichte aufweisen.

6. Verfahren nach Anspruch 4 oder 5, wobei die unvorhersehbaren Ereignisdaten Daten aufweisen, die aus der Live-Verkehrsüberwachung abgeleitet sind.

7. Verfahren nach einem der vorstehenden Ansprüche, wobei eine erste Reiselösung in einem ersten Algorithmus-Verarbeitungsschritt bestimmt und eine verbesserte Reiselösung in einem weiteren Algorithmus-Verarbeitungsschritt bestimmt wird.

8. Verfahren nach einem der vorstehenden Ansprüche, wobei die Planungskriterien eines oder mehrere der folgenden Datenelemente aufweisen: Verfügbarkeitsdaten, Distanzdaten, Zeitdaten, Depotdaten, Kundendaten und Produktdaten.

9. Verfahren nach Anspruch 8, wobei die Verfügbarkeitsdaten Verfügbarkeitsdaten für eines oder mehrere der folgenden Elemente aufweisen: eine Zugmaschine, einen Anhänger und einen Fahrer.

10. Verfahren nach einem der Ansprüche 3-9, wobei unvorhersehbare Ereignisse gemäß einer geografischen Region kategorisiert werden, in der sie auftreten, und Informationen zu dem unvorhersehbaren Ereignis an Verkehrseinheiten kommuniziert werden, die mit einer relevanten geografischen Region assoziiert sind.

11. Verfahren nach einem der vorstehenden Ansprüche, wobei die vorhergesagten Geschwindigkeitsinformationen für einen Routenabschnitt aufgezeichnet und mit tatsächlichen Geschwindigkeitsdaten für den betreffenden Routenabschnitt verglichen werden, um eine Zuverlässigkeitsmessung bereitzustellen.

12. Verfahren nach einem der vorstehenden Ansprüche, wobei die vorhergesagten Geschwindigkeitsinformationen für einen Routenabschnitt aufgezeichnet und mit tatsächlichen Geschwindigkeitsdaten für den betreffenden Routenabschnitt verglichen werden, um eine Eingabe zum Verkehrsplanungssystem zurückzumelden.

13. Verfahren nach einem der vorstehenden Ansprüche, wobei historische Geschwindigkeitsdaten mittels fließender Fahrzeugdaten-Erfassungseinheiten oder anderer mobiler Datenerfassungsmittel erfasst werden.

14. Verfahren nach einem der Ansprüche 3-13, wobei die Live-Verkehrsüberwachung mittels fließender Verkehrsdaten-Erfassungseinheiten oder anderer mobiler Datenerfassungsmittel ausgeführt wird.

15. Verfahren nach Anspruch 13 oder 14, wobei eine fließende Fahrzeugsonde zur Überwachung selektiv auf der Basis einer Wahrscheinlichkeit aktiviert wird, dass sich die Verkehrseinheit, die die Sonde aufnimmt, in einem vorbestimmten Routenabschnitt befindet.

16. Computerprogrammprodukt, das Programmcodemittel aufweist, die zum Steuern des Verfahrens nach Anspruch 1 eingerichtet sind.

17. Computersystem zur Verkehrsplanung, dass Reisen planen kann, die jeweils eine Vielzahl von Transitpunkten aufweisen, wobei das System Folgendes aufweist:
Mittel zum Empfangen von Planungskriterien, die Transitdaten und Kartendaten aufweisen, wobei die Kartendaten eine oder mehrere Routen aufweisen, wobei jede Route anhand einer Vielzahl von Routenabschnitten definiert ist;
ein Daten-Repository, das historische Geschwindigkeitsdaten für jeden Routenabschnitt und historische Geschwindigkeitsdaten für einen bestimmten Routenabschnitt, der für eine bestimmte Zeit an einem bestimmten Tag dargestellt ist, aufweist;
Mittel zum Erzeugen von vorhergesagten Geschwindigkeitsinformationen für eine Verkehrseinheit an jedem der Routenabschnitte auf der Basis der historischen Geschwindigkeitsdaten; und
Verarbeitungsmittel zum Planen einer Reise, die eine Vielzahl von Transitpunkten in Abhängigkeit von den Planungskriterien und vorhergesagten Geschwindigkeitsinformationen aufweisen.

## Revendications

1. Méthode pour le fonctionnement d'un système informatique de planification du trafic pour la planification de voyages, chaque voyage présentant une pluralité de points de transit, la méthode comprenant :
la réception de critères de planification, y compris des données de points de transit ;
la réception de données cartographiques, lesdites données cartographiques comprenant un ou plusieurs itinéraires, chaque itinéraire étant défini par une pluralité de sections d'itinéraire ;
la réception d'informations de vitesse prévisionnelle pour une unité de trafic sur chacune desdites sections d'itinéraire, la vitesse prévisionnelle pour une section d'itinéraire donnée dépendant de données de vitesse historiques pour cette section d'itinéraire à une heure prédéterminée d'un jour particulier ; et
la planification d'un voyage comprenant une pluralité de points de transit en fonction des critères de planification et des informations de vitesse prévisionnelle.

2. Méthode selon la revendication 1, dans laquelle au moins une partie du voyage planifié est replanifiée selon des critères de replanification une fois que l'unité de trafic a commencé le voyage.

3. Méthode selon la revendication 2, dans laquelle ladite étape de replanification est déclenchée en réponse à un évènement de trafic imprévu ou à une défaillance opérationnelle.

4. Méthode selon l'une quelconque des revendications précédentes, dans laquelle une ou plusieurs desdites étapes de planification ou de replanification dépendent de données d'évènements imprévisibles.

5. Méthode selon la revendication 4, dans laquelle lesdites données d'évènements imprévisibles comprennent des rapports de trafic en temps réel.

6. Méthode selon la revendication 4 ou 5, dans laquelle lesdites données d'évènements imprévisibles comprennent des données dérivées d'une surveillance du trafic en temps réel.

7. Méthode selon l'une quelconque des revendications précédentes, dans laquelle une première solution de voyage est déterminée dans une première étape de traitement par algorithme, et une solution de voyage améliorée est déterminée dans une autre étape de traitement par algorithme.

8. Méthode selon l'une quelconque des revendications précédentes, dans laquelle lesdits critères de planification comprennent un ou plusieurs parmi : des données de disponibilité ; des données de distance ; des données de temps ; des données de dépôt ; des données de client ; et des données de produit.

9. Méthode selon la revendication 8, dans laquelle lesdites données de disponibilité comprennent des données de disponibilité pour un ou plusieurs parmi : un moteur principal ; une remorque ; et un conducteur.

10. Méthode selon l'une quelconque des revendications 3 à 9, dans laquelle des évènements imprévisibles sont classés selon une zone géographique dans laquelle ils surviennent, et des informations concernant l'évènement imprévisible sont communiquées aux unités de trafic associées à une zone géographique concernée.

11. Méthode selon l'une quelconque des revendications précédentes, dans laquelle lesdites informations de vitesse prévisionnelle pour une section d'itinéraire sont enregistrées et comparées avec des données de vitesse réelle pour cette section d'itinéraire, afin de produire une mesure de fiabilité.

12. Méthode selon l'une quelconque des revendications précédentes, dans laquelle lesdites informations de vitesse prévisionnelle pour une section d'itinéraire sont enregistrées et comparées avec des données de vitesse réelle pour cette section d'itinéraire afin de renvoyer une entrée au système de planification de trafic.

13. Méthode selon l'une quelconque des revendications précédentes, dans laquelle des données de vitesse historiques sont acquises à l'aide d'unités de collecte de données de véhicule flottantes ou d'autres moyens de collecte de données mobiles.

14. Méthode selon l'une quelconque des revendications 3 à 13, dans laquelle la surveillance du trafic en temps réel est effectuée à l'aide d'unités de collecte de données de véhicule flottantes ou d'autres moyens de collecte de données mobiles.

15. Méthode selon la revendication 13 ou 14, dans laquelle une sonde de véhicule flottante est activée sélectivement pour une surveillance sur la base d'une probabilité de l'unité de trafic transportant la sonde, située sur une section d'itinéraire prédéterminée.

16. Produit de programme informatique comprenant un moyen de code de programme adapté pour contrôler la méthode selon la revendication 1.

17. Système informatique pour la planification du trafic, capable de planifier des voyages comprenant respectivement une pluralité de points de transit, le système comprenant :
un moyen pour la réception de critères de planification comprenant des données de points de transit et des données cartographiques, lesdites données cartographiques comprenant un ou plusieurs itinéraires, chaque itinéraire étant défini par une pluralité de sections d'itinéraire ;
un référentiel de données comprenant des données de vitesse historiques pour chaque section d'itinéraire, des données de vitesse historiques pour une section d'itinéraire particulière représentée pour une heure prédéterminée à une date particulière ;
un moyen pour la génération d'informations de vitesse prévisionnelle pour une unité de trafic sur chacune desdites sections d'itinéraire, sur la base desdites données de vitesse historiques ; et
un moyen de traitement pour la planification d'un voyage comprenant une pluralité de points de transit, en fonction desdits critères de planification et informations de vitesse prévisionnelle.
